# EUROPÄISCHE PATENTANMELDUNG

(11) **EP 2 228 261 A1**
(43) Veröffentlichungstag der Anmeldung: **15.09.2010**
(21) Anmeldenummer: 10002625.1
(22) Anmeldetag: 12.03.2010
(51) Int. Cl.: B60R 3/02

(54) **Ein- und Aus- bzw. Aufstiegsleiter für ein Objekt**

(30) Priorität: 13.03.2009 DE 102009013128
(71) Anmelder: Rheinmetall Landsysteme GmbH, 24107 Kiel (DE)
(72) Erfinder: Gerlach, Klaus-Peter, 34302 Guxhagen (DE); Schmidt, Dieter, 34277 Fuldabrück (DE)
(74) Vertreter: Dietrich, Barbara

(57) **Zusammenfassung**

Vorgeschlagen wird eine Leiter (4) für ein Objekt (1), das über einen Zugang (2) mit Tür (3) über diese Leiter (4) zum Erreichen einer Aufstandsfläche (6) unterhalb des Objektes (1) verfügt die Leiter (4) Ist an der Tür (3) befestigt und wird durch Schienen (5) gehaltert. An bzw. In diesen wird die Leiter (4) entlang in oder entgegen der Richtung der Aufstandsfläche (6) geführt.

## Beschreibung

Die Erfindung betrifft eine Ein-, Aus- und Aufstiegsleiter beispielsweise für ein Fahrzeug, insbesondere für den heckseitigen Zugang.

Aus der DE 10 2006 082 773 A1 ist ein militärisches Fahrzeug bekannt, das eine Leiter als heckseitigen Zugang In das Fahrzeug beinhaltet. Diese ist von einer Ruhestellung In eine Arbeitsstellung überführbar und befindet sich seitlich am Zugang. Für den Notausstieg ist eine Klappleiter vorgesehen, die um eine Schwenkachse nach unten verschwenkt bzw. geklappt wird. Eine derartige Variante hat den Nachteil, dass ein ausreichender Platz für das Umschwenken der Leiter benötigt wird. Ein weiterer Nachteil ist die Starrheit des Systems, wobei insbesondere beim Umschwenken diverse Kräfte in das System eingeleitet werden, wenn die Leiter nach dem Klappen auf dem Boden aufschlägt.

Hier stellt sich die Erfindung die Aufgabe eine Zugangsmögllchkelt aufzuzeigen, die keinen großen Aufstellbereich benötigt.

Gelöst wird die Aufgabe durch die Merkmale des Patentanspruchs 1. Vorteilhafte Ausführungen sind in den Unteransprüchen aufgezeigt.

Der Erfindung liegt die Idee zugrunde, eine Ein- und Ausatiegsleiter an einer heck- oder anderen Zugangstür einzubinden, wobei die Leiter für den Ein- oder Ausstieg entlang von Führungsschienen nach unten bewegt wird. Dadurch, dass die Leiter In ihrer Höhe verschiebbar ist, können nunmehr auch Höhenunterschiede vom Fahrzeug zum Untergrund oder Boden ausgeglichen werden. Durch das mögliche Verschwenken der Leiter um eine Querachse sind zudem verschiedene Anstellwinkel wähl- und einstellbar. Ein als Halterung für die Leiter dienender Bügel findet gleichzeitig als Haltegriff Verwendung. Der so aufgebaute Zugang ist in sich relativ flexibel bei einfacher Handhabung. Ein weiterer Vorteil liegt darin, dass die Tür selbst nicht voll geöffnet werden muss, um die Leiter abzusenken bzw. auszuschleben. Insbesondere für einen Notausstieg ist dieser dann unter teilweisem Schutz noch möglich, wobei die Tür den Schutz bietet.

Anhand eines Ausführungsbelspiels mit Zeichnung soll die Erfindung näher erläutert werden. Es zeigt:
- Fig. 1: eine Prinzipskizze für einen Zugang mit eingezogener Leiter,
- Flg. 2: den Zugang aus Fig. 1 mit ausgefahrener Leiter,
- Fig. 3: eine vergrößerte Darstellung aus Fig. 2
- Fig. 4: eine weitere Variante der Leiterführung in einer Seitenansicht.

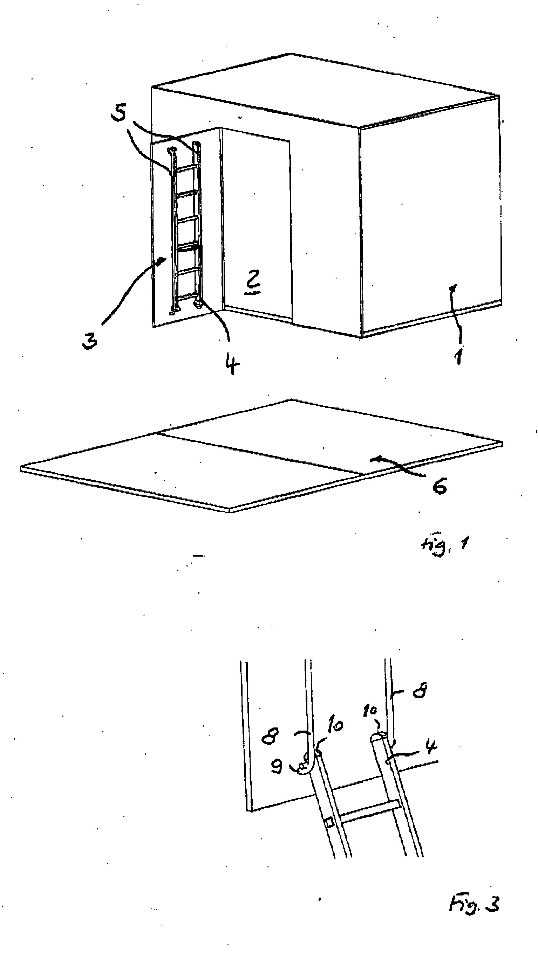

In Fig. 1 ist ein Objekt (ein Aufbau, ein Fahrzeug, ein Container etc.), mit 1 gekennzeichnet, dargestellt, das über einen Zugang 2 mit einer Tür 3 verfügt. An der Tür 3 angeordnet ist eine Aus-, Ein- und Aufstiegsleiter 4, die von Schienen 5 gehalten wird. Mit 6 ist eine so genannte Bodenaufstandsfläche gekennzeichnet, von der das Objekt 1 höhenmäßig beabstandet ist.

Für die Nutzung der Leiter 4 wird diese entlang der Schienen 5 nach unten geführt. Dies kann manuell als auch motorisch unterstützt werden. Die Schienen 5 können als runde Führungeschienen ausgeführt sein. Am unteren Ende 8 der Schienen 5 wird die Leiter 4 durch einen Endanschlag 9 gehalten.

Über diese Leiter 4 wird es nicht näher dargestellten Personen (oder anderen Subjekten) ermöglicht, das Objekt 1 zu verlassen oder zu begehen.

In einer bevorzugten Ausführung der einfachen Führungsschienen 5 ist die Leiter 4 an den oberen Enden 10 rund ausgeführt, sodass je nach Höhenunterschied zwischen dem Fahrzeug 1 und der Aufstandsfläche 6 die Leiter 4 in eine Zwischenposition geschoben wird, während sich die Rundungen 10 an die Tür 3 anlegen. Als Material hat sich ein rutschfestes Gummi hervorgetan. Alternative Materialien sind ebenfalls denkbar.

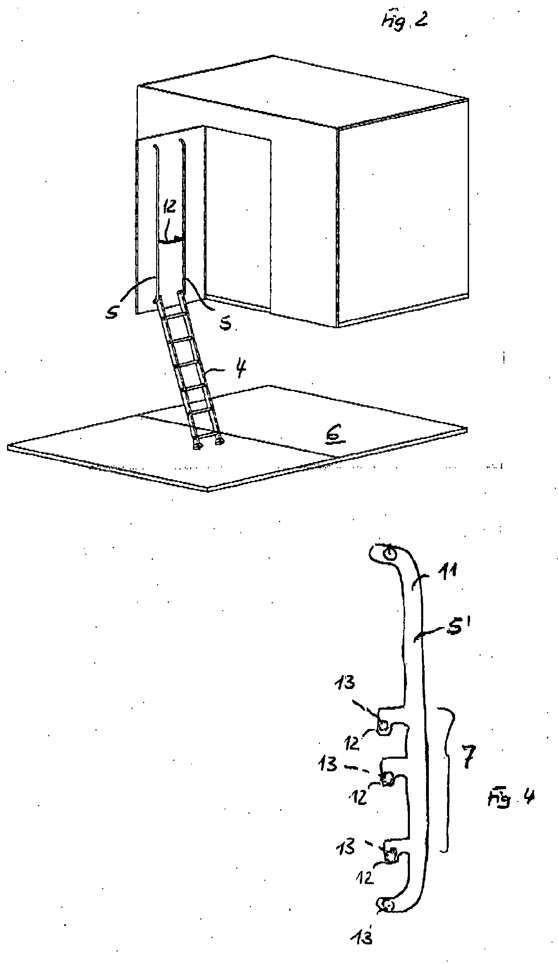

Alternativ zu den einfachen Führungsschienen 5 wären auch andere Schienen 5' denkbar, die jeweils eine Führungskurve 11 umschließen, in denen die Leiter 4 geführt werden kann (Flg. 4). Hier wären dann auch Rasten 12 einbindbar, sodass die Leiter 4 bzw. deren Bolzen 13 insbesondere Im unteren Bereich 7 der Schienen 5' in diese Rasten 12 hineinschwenkbar wäre. Diese könnte man In Abständen von 5-10 cm einbinden. In diesem Fall kann auf die rutschfesten Rundungen 10 an der Leiter 4 verzichtet werden.

Im eingefahrenen Zustand der Leiter 4 kann diese auf einem Griff 12 abgelegt werden. Im ausgefahrenen Zustand ist dieser als Haltegriff nutzbar.

## Patentansprüche

1. Leiter (4) für ein Objekt (1), das über einen Zugang (2) mit Tür (3) über diese Leiter (4) zum Erreichen einer Aufstandsfläche (8) unterhalb des Objektes (1) verfügt, wobei die Leiter (4) an der Tür (3) des Objektes (1) gehalten wird, **dadurch gekennzeichnet, dass** die Leiter (4) durch Schienen (5) gehalten wird, an bzw. In denen die Leiter (4) entlang In oder entgegen der Richtung der Aufstandsfläche (8) geführt wird.

2. Leiter nach Anspruch 1, **dadurch gekennzeichnet, dass** das Verfahren der Leiter (4) manuell oder motorisch unterstützt wird.

3. Leiter nach Anspruch 1 oder 2, **dadurch gekennzeichnet, dass** die Leiter (4) an den oberen Enden (10) rund ausgeführt ist, sodass je nach Höhenunterschied zwischen dem Objekt (1) und der Aufstandsfläche (6) die Leiter (4) in eine Zwischenposition geschoben werden kann, während sich die Rundungen (10) an die Tür (3) anlegen.

4. Leiter nach Anspruch 3, **dadurch gekennzeichnet, dass** als Material für die Rundungen (10) ein rutschfestes Gummi verwendet wird.

5. Leiter nach einem der Ansprüche 1 bis 4, **dadurch gekennzeichnet, dass** die Schienen (5) Führungskurven (10) umfassen, in denen die Leiter (4) geführt wird.

6. Leiter nach Anspruch 5, **dadurch gekennzeichnet, dass** Rasten (12) einbindbar sind, sodass die Leiter (4) insbesondere im unteren Bereich (7) der Schienen in diese Rasten hineinschwenkbar ist.

7. Leiter nach Anspruch 6, **dadurch gekennzeichnet, dass** die Abstände der Rasten (12) ca. 5-10 cm beträgt.
